Europäisches Patentamt

European Patent Office

Office européen des brevets

(11) Publication number: **0 294 835**

**A2**

## EUROPEAN PATENT APPLICATION

(21) Application number: 88109293.6

(51) Int. Cl.⁴: **B65G 47/74**

(22) Date of filing: 10.06.88

(30) Priority: 10.06.87 CS 4251/87
10.06.87 CS 4252/87
10.06.87 CS 4253/87

(43) Date of publication of application:
**14.12.88 Bulletin 88/50**

(84) Designated Contracting States:
**DE FR GB IT SE**

(71) Applicant: **ZVL Ustav pre racionálizáciu
vyroby lozisk koncernová ucelová
organizácia
Nerudova 21
Zilina(CS)**

(72) Inventor: **Cajka, Jozef, Dipl.Ing.
C.Armády 50/12
Zilina(CS)**
Inventor: **Cvacho, Marian, Dipl. Ing.
Komenského 61
Zilina(CS)**
Inventor: **Rakyta, Miroslav, Dipl.Ing.
Hlavná 1316
Fackov(CS)**
Inventor: **Zidek, Jizef, Dipl.Ing.
Hollého 33
Zilina(CS)**

(74) Representative: **Patentanwälte Beetz sen. -
Beetz jun. Timpe - Siegfried -
Schmitt-Fumian- Mayr
Steinsdorfstrasse 10
D-8000 München 22(DE)**

(54) **Arrangement for feeding and removal of articles to be treated by a sweeping return movement.**

(57) Arrangement for feeding and removal of articles to be treated, where said articles stored on pallets 14 are by a sweeping movement subsequently fed to conveying means 5 and possibly after treatment returned to said pallets 14, whereby a rather limited floor space is required for accomplishment of this task.

## Background of the invention

The invention relates to an arrangement for feeding and removal of articles to be treated by a sweeping return movement.

Arrangements for feeding and removal of articles by application of a sweeping return movement are known. One of known arrangements uses a raising platform for pallets and removable intermediate pallets and a sweeping unit comprising a couple of chain wheels and chains. A transverse sweeping bar is fixed between said chains, by means of which bar a row of articles can be shifted by a sweeping movement toward a withdrawal conveyor. Machined or treated articles can be thereafter returned to free pallets. A column storage device uses to be situated above the sweeping unit, where intermediate pallets are placed with worked articles after all not worked articles have been withdrawn.

FIG. 3

## Arrangement for feeding and removal of articles to be treated by a sweeping return movement

A drawback od this arrangement is that it is complicated , the pallets and intermediate pallets are rather heavy, they are unstable, the arrangement requires a large floor space and long time intervals are required in the course of working due to the requirement of shifting intermediate pallets in a vertical direction. Such a complicated arrangement causes also a reduced reliability in operation. In addition this arrangement cannot be used in connection with automized programmed systems, with automated guided vehicles or interoperation transport means with lateral removal of pallets without additional auxiliar constructional elements due to a large lateral width of the construction,the distance of the longitudinal axis of pallets and intermediate pallets on said arrangement from the axis of the path of means for interoperation transport uses to be larger than the allowed maximum projection of the load.

In case this arrangement is applied at an arrangement with the inlet and outlet on the same side, it is necessary, as already mentioned, to provide parallel another horizontal conveyor which transfers worked articles to the other side in order to be shifted into a pallet of the system.

An arrangement is also known for transfer of pallets based on the principle of disassembled pallet systems. One layer of articles is provided in each pallet. The articles are situated in exactly defined positions which are secured by centering elements of the pallets. The centering elements are specialized for a certain kind of articles. In case the manufacture has to be changed for another kind of articles, the centering elements of each pallet has to be exchanged.

Systemized pallets are stacked in two columns with a space between both columns of a width larger than one pallet. One column contains not worked articles, the other one worked articles. A gantry robot passes along the two columns of pallets capable to seize an upper pallet with not worked articles, lift it above the top of the column with pallets and adjust the pallet with articles to be treated to a plane of another gantry robot which takes the articles from the prepared row to a machine and again back. The planes of operation of both robots are mutually perpendicular.

After all articles of one pallet are worked, the robot which transfers the pallets, carries the pallet to the pallet column with worked articles. It seizes the following highest pallet with not worked articles and adjusts in the described manner the individual rows of articles therein to the working plane of the robot. After working of all articles all pallets of the column with not worked pallets are empty and in the column with worked articles is the maximum number of pallets. The stacked pallets can be removed by a high lift truck, by an automated guided vehicle or by a rack carriage feeder.

This arrangement is also complicated and requires a large floor space which is, compared with the floor space for pallets several times larger, the pallets have to be adjusted in case another kind of articles has to be treated, it can operate solely in connection with an industrial robot, the manipulation with pallets is slow with a long time for preparation of further articles for the industrial robot. The articles are also adjusted with difficulties in the pallets. Similar arrangements can be mostly used solely for articles which can be centered by an opening.

Oval and circular tables used for these purposes are also known. In addition to the drawback connected with manipuwith pallets they offer another drawback that the articles have to be mostly manually inserted and removed from the pallets which care for the interoperation transport.

## Summary of the invention

It is an object of this invention to provide an arrangement for feeding and removal of articles, particularly of articles which have to be machined or treated in some way, which arrangement would require a minimum floor space, which would enable an easy handling of articles with a minimum loss of time.

The arrangement according to this invention comprises a frame, transmission elements of a force, guiding means of said transmission elements of a force, driving means, transverse bars performing a sweeping movement, said transmission elements of a force adapted to change their direction of movement while guided by their guiding means and forming an elongated formation at the end of which transverse bars are situated, with driving means transmitting to said transverse bars a controlled reciprocating movement.

The transmission elements of a force can have a different shape, they can be represented by resilient bands, by resilient bands with openings at the middle of the band adapted for engagement with a toothed wheel, a number of balls or elongated bodies with rounded ends, a part of said transmission element of force being a transverse bar performing a reciprocating sweeping movement, the driving means of which can be an electric motor transmitting its movement either to a toothed wheel, to a driving wheel transmitting the movement to a belt or to a cable, a pressure cylinder performing a reciprocating movement or the like.

In connection with a compact multifloor pallet the arrangement according to this invention can by its sweeping movement shift a row of articles situated on a pallet toward a manipulation unitfrom which the articles are individually transferred for further treatment.

Description of drawings

In the attached drawings a practical embodiment of the object of this invention is shown, whereby

Fig.1 is an axonometric diagrammatical view of a mechanism securing a reciprocating sweeping movement of articles to be treated,

Fig.2 is a cross section of a guiding profile which can be applied for guiding of the transmission element of force,

Fig.3 a diagrammatical elevation of an arrangement with a compact multifloor pallet,

Fig.4 a top view thereof,

Fig.5 a diagrammatical elevation of the proper pallet

Fig.6 a side view thereof.

Description of preferred embodiment

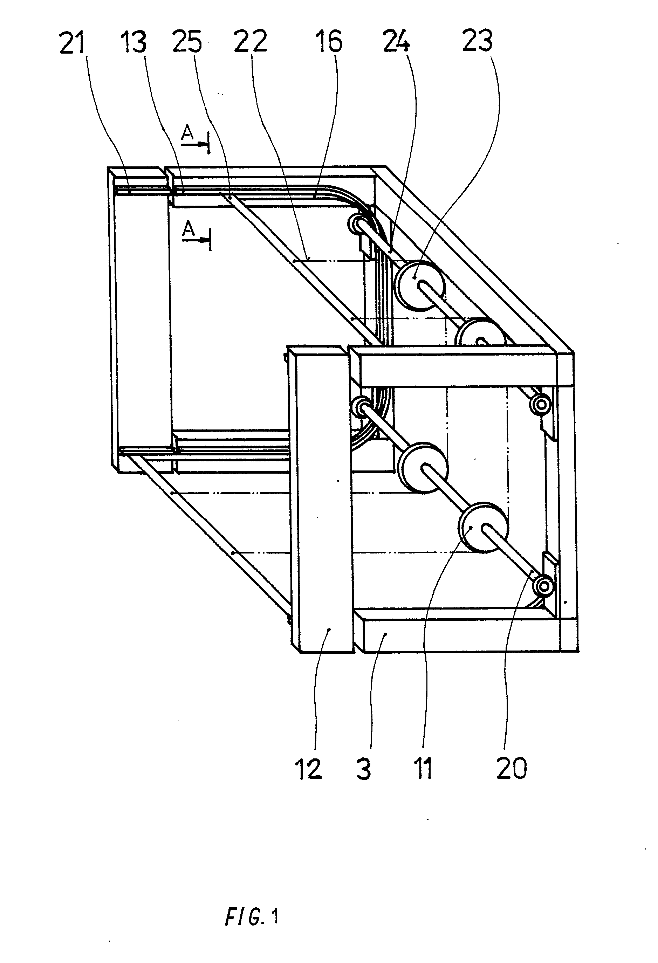

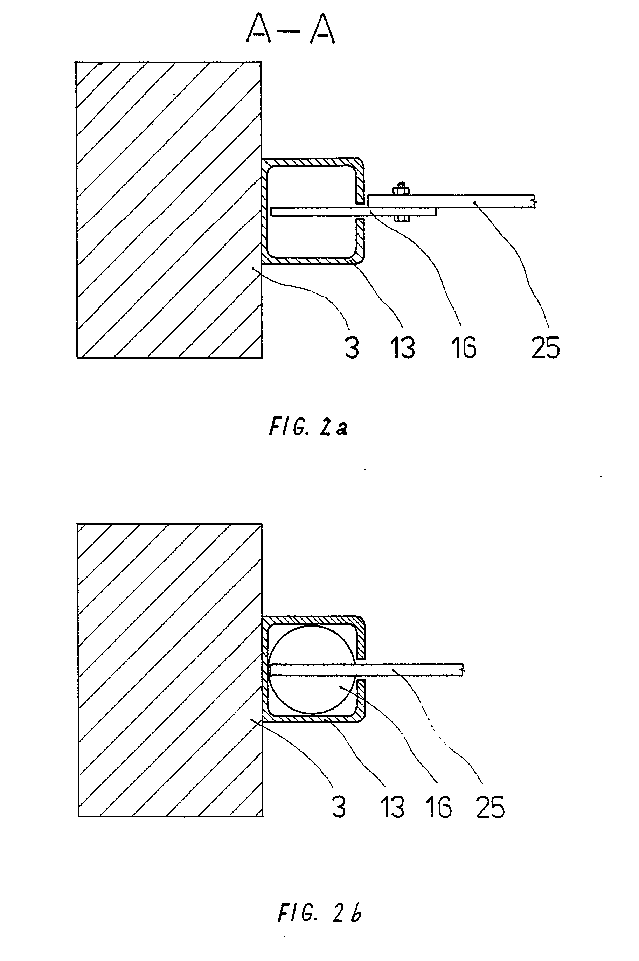

With reference to Fig.1 and 2 the mechanism securing a reciprocating sweeping movement shown as examplary embodiment comprises a frame 3 supporting a driving shaft 24 and an auxiliar shaft 20, parallel therewith. Guiding profiles 13 with longitudinal slots, for instance of a cross section indicated in Fig.2 are fixed to horizontal and vertical parts of the frame 3 so that they form a U shaped guiding path with the slot facing inside the frame 3, enabling a couple of transverse bars 25 to be shifted within said longitudinal slots of the guiding profiles 13. The proper position of the guiding profiles 13 is also secured at places, where said profiles change their position for 90°. A component of the transmission element of a force can be provided within said guiding profile 13. This component can consist of an elastic band, on the extremities of which the transverse bars 25 are fixed, it can however be an elastic band with openings in the middle of said band, or a number of balls which are mutually in contact, of short elongated bodies with rounded ends of any shape securing the proper distance of both transverse bars 25 or of any suitable means capable to care for the correct position of both bars 15, possibly also for their drive.

In case of the alternative arrangement shown in Fig.1 the drive of the whole system is secured by the driving shaft 24 in the top part of the frame 3, driven by a not shown electric motor and supporting driving wheels 23. The auxiliary shaft 20 provided at the bottom of the frame supports guiding wheels 11. The drive is accomplished by transmission means22, for instance by a chain, a V belt, a cable or by any similar device. The indicated transmission means 22 encompasses the driving wheels 23 and the guiding wheels 11 and its ends are fixed to the transverse bars 25.

It is obvious that this drive can be accomplished in any other way securing a simultaneous movement of both transverse bars 25 within the path determined by slots of the guiding profiles 13, for instance by toothed wheels fixed on the driving shaft 24 and engaging in openings of the elastic band, or finally by a pressure cylinder, the piston of which performs a reciprocating movement transmitted to the transverse bars 25.

The drive of the system is intermittent controlled in any way obvious to persons known in the art so that the transverse bars 25 are shifted for a certain distance corresponding to the lateral dimension of a row of treated articles on a pallet, as will be described later in connection with the application of this mechanism with a compact multifloor pallet or to a distance required in case this system is used for other purposes.

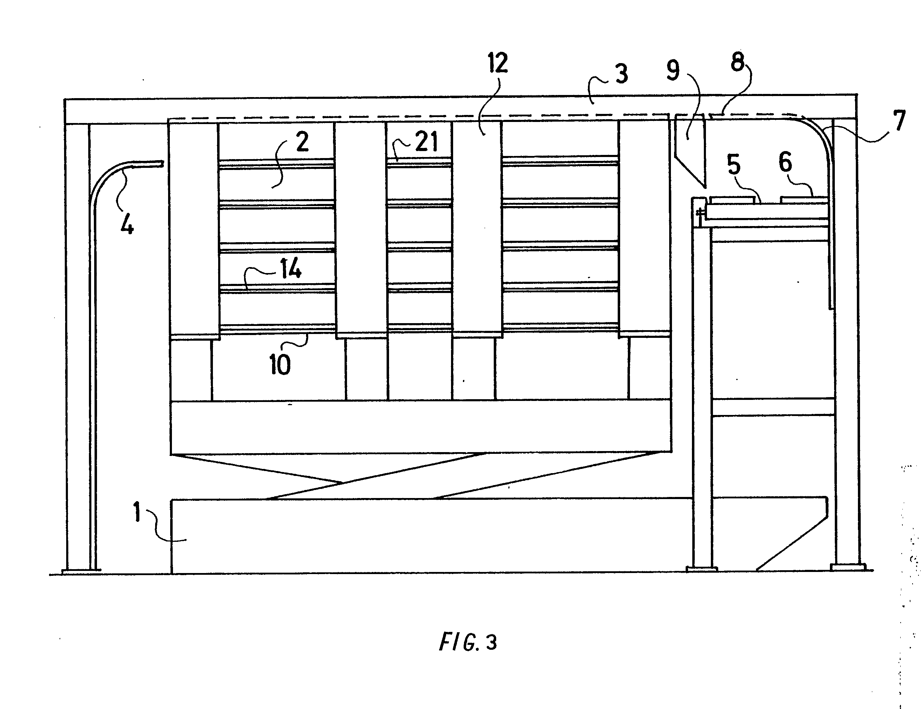

In Fig.1 opposite to horizontal parts of the frame 3 a lateral reinforcing board 12 of a compact multifloor pallet 2 shown in Fig.3 to 6 is indicated with parts of guiding profiles 21 opposite to ends of guiding profiles 21 fixed to horizontal parts of the frame 3.

In operation the transverse bar 25 can in different vertical positions of the compact pallet 2 engage into guiding profiles 21 of the compact pallet 2 to perform a horizontal sweeping movement engaging articles situated on the respective supporting plate 14 of the pallet. The mutual distance of both transverse bars 25 must be at least equal to the length of the path required for the whole sweeping movement so that prior to this sweeping movement the upper transverse bar 25 is just beyond the bent part of the guiding profile 13 on the upper horizontal part of the frame 3 and beyond the part of the guiding profile 21 fixed to the lateral reinforcing board 12 of the compact pallet 2, so that in this position, the compact pallet 2 can be shifted in the lateral direction, for instance in case it is removed as a whole by a high lift truck. The lower transverse bar 25 is either guided by parts of guiding profiles 13 on the vertical part of the frame 3, or in case a larger distance of both transverse bars 25 is required for the sweeping movement, the lower transverse bar 25 proceeds in the lower part of the guiding profile 13 on the lower horizontal part of the frame 3. In the other extreme position of the upper transverse bar 25 arrived just at the end of the guiding profile 21 on the compact pallet 2, while the lower transverse bar 25 remains still in the guiding profiles 13 on the frame 3.

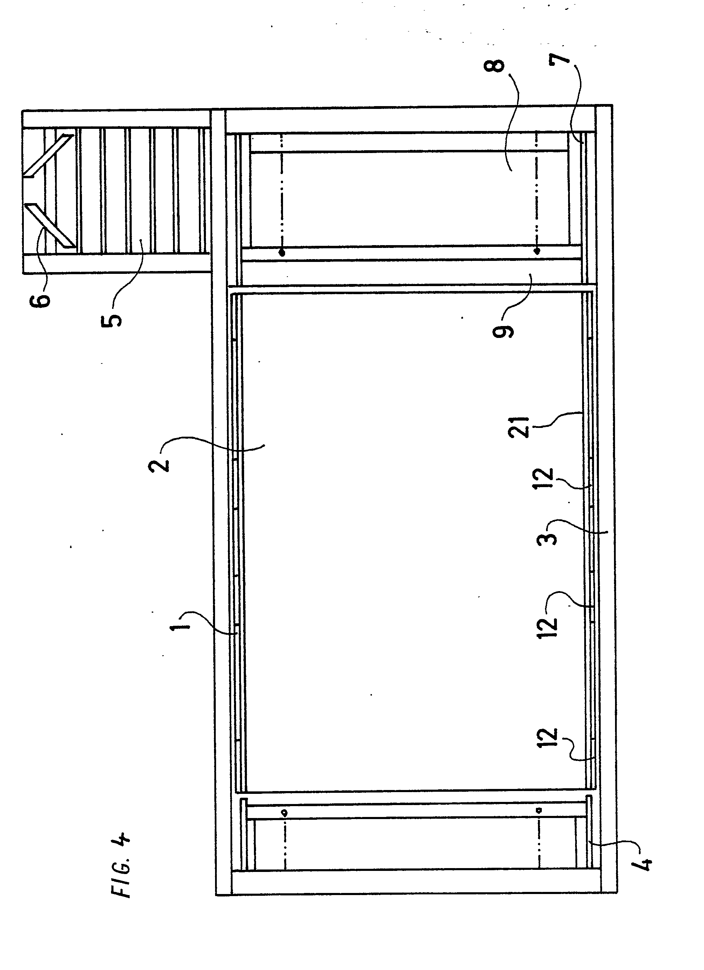

For the whole execution of the sweeping movement solely a relatively small floor space is required as is more obvious from Fig.3 and 4 showing an elevation and a top view of an application of this mechanism in connection with a compact pallet 2 and a manipulation unit 8.

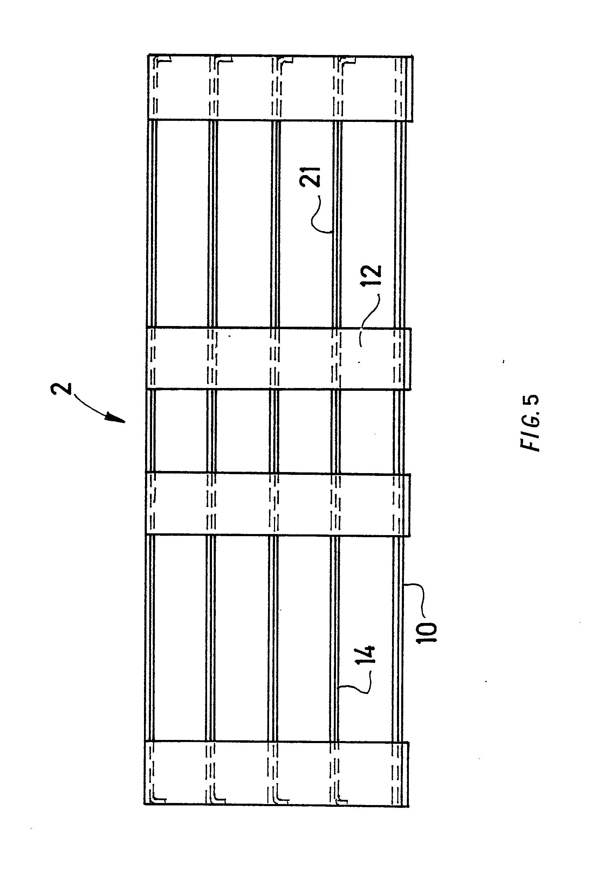

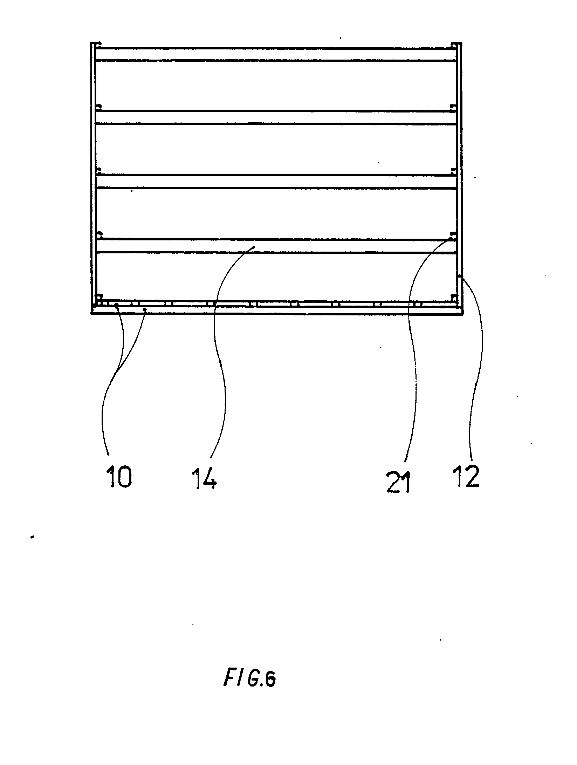

Within the frame 3 a raising platform 1 is situated, capable to raise and lower a compact pallet 2, in this case provided with six floors of pallet plates 14. Said compact pallet 2, as indicated in more detail in Fig.5 and 6 in elevation and side view, comprises a supporting plate 10, lateral reinforcing boards 12 with additional guiding profiles 21 for the transmission elements of force 16 including the trans verse bar 25 and pallet plates 14 firmly fixed to the lateral reinforcing boards 12. The compact pallet 2 forms thus a stiff unit adapted to be raised and lowered by the raising platform 1, where its correct position is for instance secured by not shown bolts engaging into proper openings. It can be also lifted by a high lift truck and removed from the frame 3.

In the left part of Fig.3 a sweeping unit 4 is shown, of a design similar to Fig.1, with guiding profiles 13 solely on vertical and upper horizontal parts of the frame 3. In the right part of Fig.3 a manipulation unit 8 is provided, comprising a withdrawing conveyor 5, at the end of which a positioning element 6 is provided /see also Fig.4/ , in the case given two rectifying bars oppositely inclined, forcing an article transferred by the conveyor 5 to take a position at the center of the conveyor outlet. This positioning element 6 can be provided with optoelectric feelers controlling the movement of the conveyor 5 and indicating that an article has arrived at the proper place.

A chute 9 is furthermore provided between the right end of the compact pallet 2 and the withdrawing conveyor 5, the inlet of said chute 9 being somewhat below the level of the pallet plate 14, with which the conveyor is supposed to cooperate.

In fig.3 an additional loading unit 7 is indicated in the right part of frame 3, which loading unit 7 is of similar design as the sweeping unit 4 at the left part of the frame 3, the task of which is to serve for loading of already treated articles to already empty pallet plates 14. Its length needs not be so long as the length of the sweeping unit 4.

In operation the compact multifloor pallet, loaded by an automated guided truck with lateral discharge or by some other suitable loading device, is deposited on supports on the raising platform 1 from the side, opposite to the positioning element 6 of articles on the conveyor 5. All pallet plates 14 of the compact pallet 2 with exception of the top one are thus loaded by articles to be treated. The sweeping unit 4 is after adjustment on the height of the compact pallet 2 just opposite by its guiding profile 13 to the guiding profile 21 of the topmost pallet plate 14 loaded with articles, capable for engagement therewith.

The transverse bar 25 of the sweeping unit 4 can now apply pressure on the layer of articles on the pallet plate 14 of the compact pallet 2 until the front row of articles close to the manipulation unit 8 is by way of the chute 9 transferred to the withdrawing conveyor 5. In this position a limit switch interrupts the movement of the sweeping unit 4 and simultaneously starts the movement of the withdrawing conveyor 5 which moves the row of articles until the first article of this row reaches the positioning element 6 where this article takes its correct place for withdrawal and the further movement of the conveyor is stopped.

An industrial robot can now seize this article, the place of this article can be now occupied by the following article of the row until all articles from this row are withdrawn, whereafter the following row is fed until the whole pallet plate 14 is emptied.

The whole compact pallet 2 is thereafter raised so that the following pallet plate 14 full of articles to be treated and the just described sweeping movement is repeated.

In the meantime the industrial robot prior to returning to the withdrawing conveyor 5 takes along a treated article and deposits it on top of the manipulation unit 8, wherefrom the treated articles are by a sweeping movement of a transverse bar 25 of the loading unit 7 shifted to the topmost empty pallet plate 14 similarly as has been done by the sweeping unit 4 for feeding not treated articles, until all articles are worked and returned to the compact pallet 2 which can be thereafter removed by a high lift truck.

It is obvious that the arrangement according to this invention can be applied also for other purposes than described in this specification, particularly where the space for execution of a similar movement is scarce.

Index of reference marks

1. raising platform
2. compact multifloor pallet
3. frame
4. sweeping unit

5. withdrawing conveyor
6. positioning element
7. loading unit
8. manipulation unit
9. chute
10. supporting plate of the compact pallet
11. guiding wheel
12. lateral reinforcing board
13. guiding profile
14. pallet plate
15. transmission element of force
20. auxiliary shaft
21. auxiliary guiding profile
22. transmission
23. driving wheel
24. driving shaft
25. transverse bar

## Claims

1. Arrangement for feeding and removal of articles to be treated by a sweeping return movement comprising a frame 3 supporting transmission elements 16:22 of force with transverse bars 25 performing a reciprocating sweeping movement guided by guiding means 13, characterised in that the transmission elements 16:22 of force are forming an elongated formation adapted to change their direction of advance, with transverse bars 25 at each end of said elongated formation, maintaining their mutual distance.

2. Arrangement as in claim 1, characterised in that the guiding means 13 are of elongated shape, with a longitudinal slot, capable to guide ends of said transverse bars /25/.

3. Arrangement as in claim 1, characterised in that the transmission element of force /16/ is a flexible band.

4. Arrangement as in claim 1, characterised in that the transmission element of force /16/ is a number of closely arranged balls.

5. Arrangement as in claim 1, characterised in that the transmission element of force /16/ is represented by a number of closely arranged elongated bodies with rounded ends.

6, Arrangement as in claim 1, characterised in that the sweeping return movement of transverse bars /25/ is derived from a driving shaft /24/ with toothed wheels, engaging into a row of openings of a flexible band, forming a transmission element of force /16/, guided by guiding means /13/.

7. Arrangement as in claim 1, characterised in that the sweeping movement of transverse bars 25/ is derived from a driving shaft /24/ with driving wheels 23/, transmitting the movement to the transverse bars 25/ by way of transmission elements /22/ encompassing the driving wheels /24/.

8. Arrangement as in claim 1, characterised in that the sweeping movement of the transverse bars /25/ is derived from the movement of a piston of a pressure cylinder.

9. Arrangement as in claim 1, characterised in that it is cooperating with a compact pallet /2/ with advantageously a number of pallet plates /14/ above each other.

10. Arrangement as in claim 9, characterised in that said compact pallet /2/ is provided with means /1/ for raising and lowering.

11. Arrangement as in claim 9, characterised in that the compact pallet /2/ is provided with horizontal guiding profiles /21/ for guiding of ends of transverse bars /25/.

12. Arrangement as in claim 9, characterised in that it is provided with a manipulation unit /8/ with a withdrawing conveyer /5/ at one end of the compact pallet /2/.

13. Arrangement as in claim 12, characterised in that the manipulation unit /8/ comprises in addition a loading unit /7/ of a similar design as the sweeping unit /4/, performing a sweeping return movement, said loading unit /7/ adjusting already treated articles on empty pallet plates /14/ of the compact pallet /2/

14. Arrangement as in claim 12, characterised in that the withdrawing conveyor /5/ is provided with positioning elements /6/, adjusting the position of articles at the end of the conveyor.

*FIG.* 1

A — A

FIG. 2 a

FIG. 2 b

FIG. 3

EP 0 294 835 A2

FIG. 4

EP 0 294 835 A2

FIG. 5

EP 0 294 835 A2

FIG.6